# EUROPEAN PATENT APPLICATION

(11) **EP 4 372 879 A1**
(43) Date of publication of application: **22.05.2024**
(21) Application number: 23210016.4
(22) Date of filing: 15.11.2023
(51) Int. Cl.: H01M 50/209, H01M 50/55, H01M 50/267, H01M 10/12, H01M 50/204

(54) **BATTERY PACK**

(30) Priority: 16.11.2022 JP 2022183382
(71) Applicant: Suzuki Motor Corporation, Hamamatsu-shi, Shizuoka 432-8611 (JP)
(72) Inventor: HORIUCHI, Atsushi, HAMAMATSU-SHI (JP); MITSUOKA, Shigehi, HAMAMATSU-SHI, 432-8611 (JP); OSANAI, Hiroki, HAMAMATSU-SHI (JP); KIKUYA, Kazunobu, OKAZAKI (JP)
(74) Representative: Plasseraud IP

(57) **Abstract**

[Problem to be Solved]

There is provided a battery pack (1) capable of preventing a storage battery (10) from being wrongly assembled due to an error in an orientation of the storage battery (10) or an error in a connection destination of a connection cable (40).

[Solution]

In a battery pack (1), a plurality of storage batteries (10) have a plurality of positive terminals (11A, 11B) and a plurality of negative terminals (21A, 21B) corresponding in number to the positive terminals (11A, 11B). One of the plurality of positive terminals (11A, 11B) and the plurality of negative terminals (21A, 21B) is arrayed in a first direction, and the other of the plurality of positive terminals (11A, 11B) and the plurality of negative terminals (21A, 21B) is arrayed in a second direction different from the first direction.

## Description

### [Technical Field]

The present invention relates to a battery pack.

### [Background Art]

JP2005-19051A describes a lead storage battery system which uses a plurality of lead batteries connected in series. The lead storage battery system described in JP2005-19051A has many stripe-shaped ribs extending in an up-down direction at a side surface of each lead storage battery in order to improve heat dissipation by convection. The lead storage battery system described in JP2005-19051A also has a metallic pipe for heat dissipation installed in a gap between a recessed portion formed by ribs and metal foil in order to promote heat dissipation. This allows the lead storage battery system described in JP2005-19051A to avoid an excessive rise in a temperature of each lead storage battery even if the lead storage batteries are arrayed close to each other to achieve size reduction.

### [Citation List]

### [Patent Literature]

[Patent Literature 1] JP2005-19051A

### [Summary of Invention]

### [Technical Problem]

However, if a storage battery arranged with wrong polarity is included in a battery pack in the one described in JP2005-19051A, the storage battery arranged with wrong polarity cannot be easily identified by appearance. A worker may connect, with wrong polarity, terminals of a plurality of storage batteries by a connection cable to short-circuit the storage batteries.

Under the circumstances, the present invention has as its object to provide a battery pack capable of preventing a storage battery from being wrongly assembled due to an error in an orientation of the storage battery or an error in a connection destination of a connection cable.

### [Solution to Problem]

To solve the above-described problem, according to the present invention, there is provided a battery pack in which a plurality of storage batteries are combined and connected, characterized in that the plurality of storage batteries have a plurality of positive terminals and a plurality of negative terminals corresponding in number to the positive terminals, one of the plurality of positive terminals and the plurality of negative terminals is arrayed in a first direction, and the other of the plurality of positive terminals and the plurality of negative terminals is arrayed in a second direction different from the first direction.

### [Advantageous Effect of Invention]

As described above, according to the present invention, it is possible to provide a battery pack capable of preventing a storage battery from being wrongly assembled due to an error in an orientation of the storage battery or an error in a connection destination of a connection cable.

### [Brief Description of Drawings]

[Figure 1] Figure 1 is a perspective view of a battery pack according to one embodiment of the present invention.
[Figure 2] Figure 2 is a plan view of each of storage batteries constituting the battery pack according to the one embodiment of the present invention.
[Figure 3] Figure 3 is a side view of each of the storage batteries constituting the battery pack according to the one embodiment of the present invention.
[Figure 4] Figure 4 is a plan view of the battery pack according to the one embodiment of the present invention.

### [Description of Embodiment]

A battery pack according to one embodiment of the present invention is a battery pack in which a plurality of storage batteries are combined and connected, wherein the plurality of storage batteries have a plurality of positive terminals and a plurality of negative terminals corresponding in number to the positive terminals, one of the plurality of positive terminals and the plurality of negative terminals is arrayed in a first direction, and the other of the plurality of positive terminals and the plurality of negative terminals is arrayed in a second direction different from the first direction. This allows the battery pack according to the one embodiment of the present invention to prevent a storage battery from being wrongly assembled due to an error in an orientation of the storage battery or an error in a connection destination of a connection cable.

### [Embodiment]

A battery pack according to an embodiment of the present invention will be described below in detail with reference to the drawings. In the drawing, an X direction, a Y direction, and a Z direction correspond to length directions, width directions, and height directions of the battery pack and storage batteries and are orthogonal to one another.

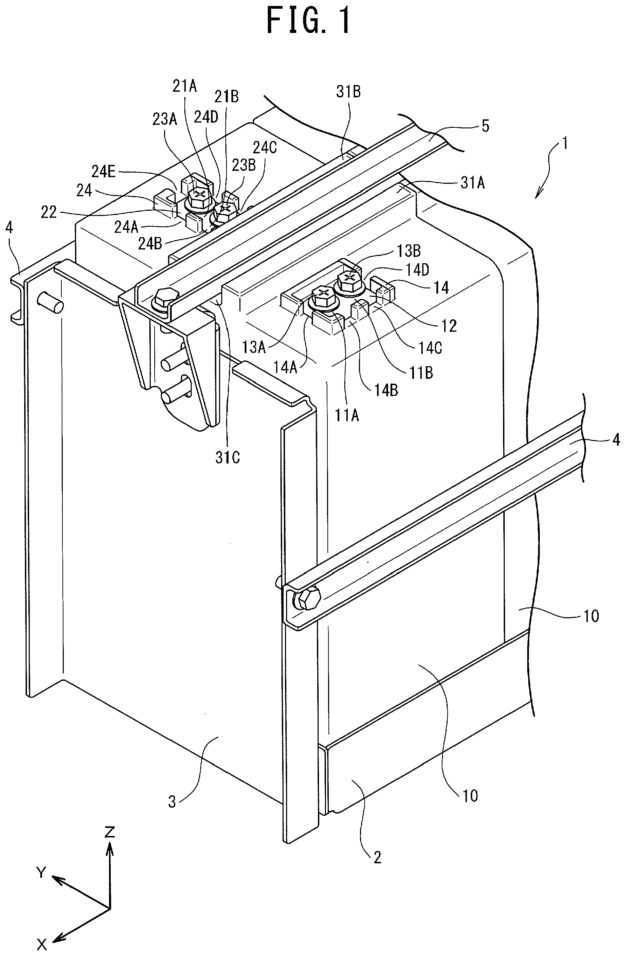

In Figure 1, a battery pack 1 according to one embodiment of the present invention is composed of a plurality of storage batteries 10 combined and electrically connected. The storage battery 10 is formed by, for example, recycling a used on-board battery formerly mounted on an automobile or the like. The battery pack 1 is used as a power source which needs a large amount of electricity for, for example, a street lamp, a cold storage, a forklift, or an automatic guided vehicle (AGV).

The battery pack 1 is configured to include the plurality of storage batteries 10, a bottom plate 2 which supports bottom surfaces of the plurality of storage batteries 10, one pair of side plates 3 which support two side surfaces in an X direction of each of the plurality of storage batteries 10, one pair of holders 4 which support two side surfaces in a Y direction of each of the plurality of storage batteries 10, and a fixture 5 which supports upper surfaces of the plurality of storage batteries 10. The plurality of storage batteries 10 are integrated by being supported by a support which is composed of the bottom plate 2, the side plates 3, the holders 4, and the fixture 5. Since the battery pack 1 can be conveyed in units of storage batteries 10 before actual use, the battery pack 1 can also be used as a portable power source.

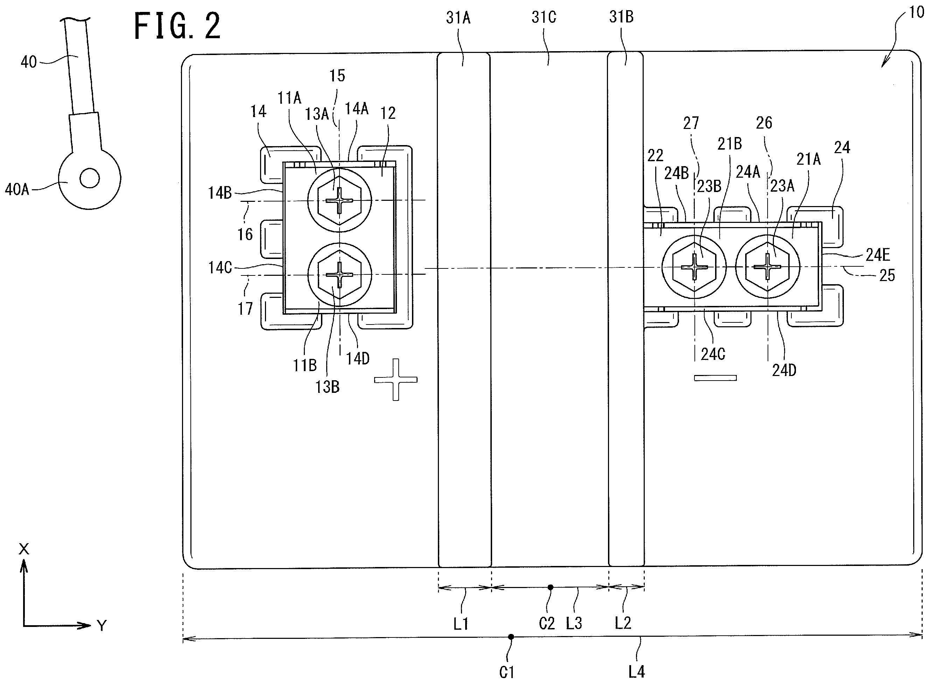

In Figure 2, the plurality of storage batteries 10 have a plurality of positive terminals 11A and 11B and a plurality of negative terminals 21A and 21B corresponding in number to the positive terminals 11A and 11B. More specifically, each storage battery 10 has two positive terminals 11A and 11B and two negative terminals 21A and 21B. The positive terminals 11A and 11B and the negative terminals 21A and 21B are provided on the upper surface of the storage battery 10.

One of the plurality of positive terminals 11A and 11B and the plurality of negative terminals 21A and 21B is arrayed in a first direction, and the other of the plurality of positive terminals 11A and 11B and the plurality of negative terminals 21A and 21B is arrayed in a second direction different from the first direction. The first direction and the second direction are orthogonal to each other.

More specifically, the plurality of positive terminals 11A and 11B are arrayed in the X direction as the first direction, and the plurality of negative terminals 21A and 21B are arrayed in the Y direction as the second direction.

On an extension in an arraying direction of one of the plurality of positive terminals 11A and 11B and the plurality of negative terminals 21A and 21B, a terminal constituting the other of the plurality of positive terminals 11A and 11B and the plurality of negative terminals 21A and 21B is arranged.

More specifically, the positive terminal 11B is arranged on a center line 25 as an extension in an arraying direction (the Y direction) of the plurality of negative terminals 21A and 21B. Note that, contrary to Figure 2, the arraying direction of the plurality of positive terminals 11A and 11B may be assumed as the Y direction and that the arraying direction of the plurality of negative terminals 21A and 21B may be assumed as the X direction. In this case, either the negative terminal 21A or the negative terminal 21B is arranged on an extension in the arraying direction of the positive terminals 11A and 11B.

The plurality of positive terminals 11A and 11B have a terminal-fixed base 12 to be connected to a connection cable 40 and a plurality of terminal fixing portions 13A and 13B for fixing the connection cable 40 to the terminal-fixed base 12. The plurality of negative terminals 21A and 21B have a terminal-fixed base 22 to be connected to the connection cable 40 and a plurality of terminal fixing portions 23A and 23B for fixing the connection cable 40 to the terminal-fixed base 22.

An annular solderless terminal 40A is fixed to an end portion of the connection cable 40 by crimping. The solderless terminals 40A of the connection cables 40 are in contact with and are electrically connected to the terminal-fixed bases 12 and 22.

The terminal-fixed bases 12 and 22 are contacts which are electrically connected to the connection cables 40. Sites in contact with the connection cables 40 in the terminal-fixed bases 12 and 22 constitute the positive terminals 11A and 11B and the negative terminals 21A and 21B. The terminal fixing portions 13A, 13B, 23A, and 23B are composed of bolts and are configured to be screwed into the terminal-fixed bases 12 and 22 with the connection cables 40 in contact with the terminal-fixed bases 12 and 22. More specifically, the terminal fixing portions 13A, 13B, 23A, and 23B are screwed into the terminal-fixed bases 12 and 22 while being inserted in the solderless terminals 40A. The two positive terminals 11A and 11B share one terminal-fixed base 12 in a rectangular shape having long sides in the X direction. The two negative terminals 21A and 21B share one terminal-fixed base 22 in a rectangular shape having long sides in the Y direction.

Rectangular wall portions 14 and 24 are provided on the upper surface of the storage battery 10 to surround the terminal-fixed bases 12 and 22. The wall portions 14 and 24 protrude in a height direction (a Z direction). The wall portions 14 and 24 function as protective members for preventing a cover or the like (not shown) of the battery pack 1 from coming into contact with the terminal-fixed bases 12 and 22 and the terminal fixing portions 13A, 13B, 23A, and 23B to cause short-circuiting.

The wall portion 14 that surrounds the positive terminals 11A and 11B has guide grooves 14A to 14D for the connection cable 40 to pass through. The guide grooves 14A to 14D are formed on a center line 15 which passes through centers of the plurality of terminal fixing portions 13A and 13B and on orthogonal lines 16 and 17 which are orthogonal to the center line 15 and pass through the centers of the plurality of terminal fixing portions 13A and 13B.

More specifically, the guide groove 14Ais provided on one side in the X direction of the center line 15, and the guide groove 14D is provided on the other side in the X direction of the center line 15. The guide groove 14B is provided on one side in the Y direction of the orthogonal line 16, and the guide groove 14C is provided on the one side in the Y direction of the orthogonal line 17.

The wall portion 24 that surrounds the negative terminals 21A and 21B has guide grooves 24A to 24E for the connection cable 40 to pass through. The guide grooves 24A to 24E are formed on the center line 25 that passes through centers of the plurality of terminal fixing portions 23A and 23B and on orthogonal lines 26 and 27 which are orthogonal to the center line 25 and pass through the centers of the plurality of terminal fixing portions 23A and 23B.

More specifically, the guide groove 24E is provided on the other side in the Y direction of the center line 25. The guide groove 24A is provided on the one side in the X direction of the orthogonal line 26, and the guide groove 24D is provided on the other side in the X direction of the orthogonal line 26. The guide groove 24B is provided on the one side in the X direction of the orthogonal line 27, and the guide groove 24C is provided on the other side in the X direction of the orthogonal line 27.

Since the guide grooves 14A to 14D and 24A to 24E for the connection cable 40 to pass through are provided in the wall portions 14 and 24, the connection cable 40 can be routed at a same height as a surface of the terminal-fixed base 22 at the upper surface of each storage battery 10. A length of the connection cable 40 can be set to a shortest distance between two terminals to be connected thereto.

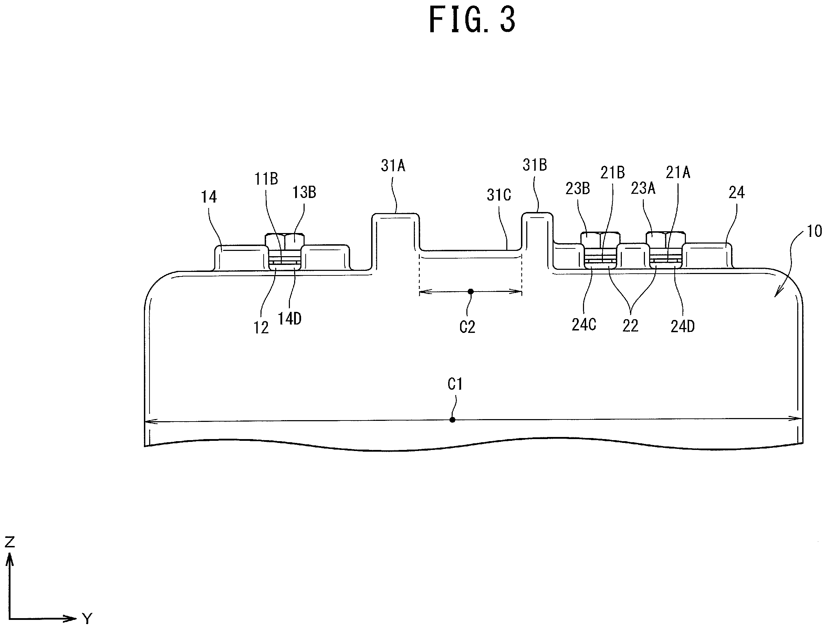

In Figures 2 and 3, the storage battery 10 has one pair of protruding portions 31A and 31B. The protruding portions 31A and 31B protrude in a height direction (the Z direction) of the positive terminals 11A and 11B and the negative terminals 21A and 21B between the positive terminals 11A and 11B and the negative terminals 21A and 21B at the upper surface of the storage battery 10. The protruding portions 31A and 31B extend in a direction (the X direction) dividing the positive terminals 11A and 11B from the negative terminals 21A and 21B.

The fixture 5 (see Figure 1) for positioning the plurality of storage batteries 10 is fit in a groove portion 31C between the one pair of protruding portions 31A and 31B. A width L3 of a gap between the one pair of protruding portions 31A and 31B is almost equal to a width of the fixture 5. The one pair of the protruding portions 31A and 31B functions not only as members for positioning by fitting with the fixture 5 but also as protective members for preventing the cover or the like (not shown) of the battery pack 1 from coming into contact with the terminal-fixed bases 12 and 22 and the terminal fixing portions 13A, 13B, 23A, and 23B to cause short-circuiting.

In Figure 2, one of the one pair of protruding portions 31A and 31B is different in thickness from the other. More specifically, a thickness L1 of the protruding portion 31A is larger than a thickness L2 of the protruding portion 31B.

A center position C2 between the one pair of protruding portions 31A and 31B and a center position C1 of a width of the storage battery 10 are different in a direction (the Y direction) crossing the one pair of protruding portions 31A and 31B and dividing the positive terminals 11A and 11B from the negative terminals 21A and 21B. The center position C2 between the protruding portions 31A and 31B here refers to a position of a center of a groove portion 31C between the protruding portions 31A and 31B in the Y direction. The width of the storage battery 10 refers to a dimension in the Y direction of the storage battery 10. More specifically, the thickness L1 of the protruding portion 31A is larger than the thickness L2 of the protruding portion 31B. With this configuration, the center position C2 is deflected from the center position C1 in the Y direction, and positions of the one pair of protruding portions 31A and 31B are asymmetric in the Y direction.

One of the plurality of positive terminals 11A and 11B and the plurality of negative terminals 21A and 21B is arrayed in a direction orthogonal to an extension direction of the one pair of protruding portions 31A and 31B. The other of the plurality of positive terminals 11A and 11B and the plurality of negative terminals 21A and 21B is arrayed in a direction parallel to the extension direction of the one pair of protruding portions 31A and 31B.

More specifically, the plurality of negative terminals 21A and 21B are arrayed in the direction (the Y direction) orthogonal to the extension direction (the X direction) of the one pair of protruding portions 31A and 31B. The plurality of positive terminals 11A and 11B are arrayed in the direction (the X direction) parallel to the extension direction of the one pair of protruding portions 31A and 31B.

The wall portions 14 and 24 are different in width in the direction (the Y direction) crossing the one pair of protruding portions 31A and 31B and dividing the positive terminals 11A and 11B from the negative terminals 21A and 21B between a side with the positive terminals 11A and 11B and a side with the negative terminals 21A and 21B.

More specifically, the wall portion 14 on the side with the positive terminals 11A and 11B is formed in a rectangular shape having long sides in the X direction, and the wall portion 24 on the side with the negative terminals 21A and 21B is formed in a rectangular shape having long sides in the Y direction. For this reason, in the direction (the Y direction) crossing the one pair of protruding portions 31A and 31B and dividing the positive terminals 11A and 11B from the negative terminals 21A and 21B, a width of the wall portion 14 is smaller than a width of the wall portion 24.

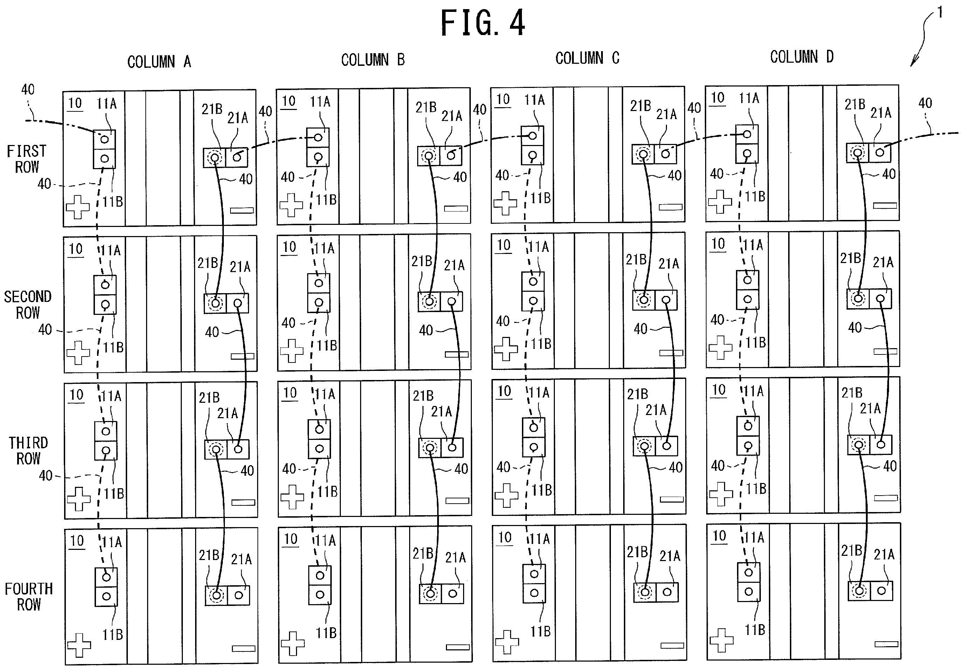

As shown in Figure 4, the battery pack 1 can be configured to have 16 storage batteries 10 arranged in a matrix with four rows and four columns. More specifically, the battery pack 1 can be configured to increase an electricity storage capacity by parallel-connecting four storage batteries 10 and to increase a voltage by series-connecting four parallel-connected storage batteries 10.

In Figure 4, the connection cable 40 expressed by a broken line or a solid line is a cable which connects homopolar terminals of the storage batteries 10 adjacent in a row direction. The connection cable 40 expressed by a chain line is a cable which connects heteropolar terminals of the storage batteries 10 adjacent in a column direction. The connection cable 40 expressed by the chain line is so-called transition wiring and connects, for example, the negative terminal 21A of the storage battery 10 in a first row and column A and the positive terminal 11A of the storage battery 10 in the first row and column B. The connection cable 40 expressed by a two-dot chain line is a cable which inputs and outputs electricity between the battery pack 1 and an electricity usage device (not shown).

As shown in Figure 4, in column A, four storage batteries 10 in first to fourth rows are parallel-connected. More specifically, in column A, the positive terminal 11B of the storage battery 10 on one side (in the first row, for example) and the positive terminal 11A of the storage battery 10 on the other side (in the second row, for example) adjacent thereto face each other with a shortest distance. In column A, the negative terminal 21B of the storage battery 10 on one side (in the first row, for example) and the negative terminal 21B of the storage battery 10 on the other side (in the second row, for example) adjacent thereto face each other with a shortest distance.

For the above-described reason, the length of the connection cable 40 can be minimized by connecting homopolar terminals facing each other with a shortest distance by the connection cable 40. Since the solderless terminal 40A (see Figure 2) of one connection cable 40 is connected to one positive terminal 11A or 11B or negative terminal 21A or 21B, the need to connect two solderless terminals 40A overlaid one on top of the other to one positive terminal 11A or 11B or negative terminal 21A or 21B can be eliminated.

The negative terminal 21A on an outer side of the storage battery 10 in column A and the first row is connected to the positive terminal 11A on an upper side of the storage battery 10 in column B and the first row, the negative terminal 21A on the outer side of the storage battery 10 in column B and the first row is connected to the positive terminal 11A on the upper side of the storage battery 10 in column C and the first row, and the negative terminal 21A on the outer side of the storage battery 10 in column C and the first row is connected to the positive terminal 11A on the upper side of the storage battery 10 in column D and the first row.

As has been described above, in the present embodiment, a plurality of storage batteries 10 have a plurality of positive terminals 11A and 11B and a plurality of negative terminals 21A and 21B corresponding in number to the positive terminals 11A and 11B. One of the plurality of positive terminals 11A and 11B and the plurality of negative terminals 21A and 21B is arrayed in a first direction, and the other of the plurality of positive terminals 11A and 11B and the plurality of negative terminals 21A and 21B is arrayed in a second direction different from the first direction.

With the above-described configuration, a worker can easily determine polarity of the storage battery 10 on the basis of a difference in appearance caused by a difference in arraying direction between the positive terminals 11A and 11B and the negative terminals 21A and 21B. This prevents the storage battery 10 from being arranged with wrong polarity.

Since the storage battery 10 can be prevented from being arranged with wrong polarity, selection of a wrong connection destination can be prevented at the time of connecting a plurality of storage batteries 10 by the connection cable 40.

As a result, it is possible to prevent the storage battery 10 from being wrongly assembled due to an error in an orientation of the storage battery 10 or an error in a connection destination of the connection cable 40.

In the present embodiment, the first direction and the second direction are orthogonal to each other.

With the above-described configuration, the worker can easily and clearly determine the polarity of the storage battery 10 on the basis of a difference in appearance caused by orthogonality between arraying directions of the positive terminals 11A and 11B and the negative terminals 21A and 21B. This prevents the storage battery 10 from being arranged with wrong polarity.

Since the arraying direction of the positive terminals 11A and 11B is orthogonal to the arraying direction of the negative terminals 21A and 21B, a shortest length of the connection cable 40 that connects the positive terminals 11A and 11B, a shortest length of the connection cable 40 that connects the negative terminals 21A and 21B, and a shortest length of the connection cable 40 that connects the positive terminals 11A and 11B and the negative terminals 21A and 21B are different from each other among the adjacent storage batteries 10. Selection of a wrong connection destination for the connection cable 40 can be prevented by setting a length of the connection cable 40 different for each object to be connected thereto.

As a result, it is possible to prevent the storage battery 10 from being wrongly assembled due to an error in the orientation of the storage battery 10 or an error in the connection destination of the connection cable 40.

In the present embodiment, on an extension in the arraying direction of one of the plurality of positive terminals 11A and 11B and the plurality of negative terminals 21A and 21B, a terminal constituting the other of the plurality of positive terminals 11A and 11B and the plurality of negative terminals 21A and 21B is arranged.

With the above-described configuration, the connection cable 40 that is to connect the negative terminal 21A and the positive terminal 11A (or the positive terminal 11B) of the storage batteries 10 adjacent in the Y direction can be easily connected (transition-wired), and the length of the connection cable 40 can be minimized.

The shortest length of the connection cable 40 that connects the positive terminals 11A and 11B, the shortest length of the connection cable 40 that connects the negative terminals 21A and 21B, and the shortest length of the connection cable 40 that connects the positive terminals 11A and 11B and the negative terminals 21A and 21B are different from each other among the adjacent storage batteries 10. Selection of a wrong connection destination for the connection cable 40 can be prevented by setting the length of the connection cable 40 different for each object to be connected thereto.

In the present embodiment, the plurality of positive terminals 11A and 11B and the plurality of negative terminals 21A and 21B have the terminal-fixed bases 12 and 22 to be connected to the connection cable 40 and a plurality of terminal fixing portions 13A, 13B, 23A, and 23B for fixing the connection cable 40 to the terminal-fixed bases 12 and 22. The wall portions 14 and 24 are provided on an upper surface of the storage battery 10 so as to surround the terminal-fixed bases 12 and 22. The wall portions 14 and 24 have the guide grooves 14A to 14D and 24A to 24E for the connection cable 40 to pass through on the center lines 15 and 25 that pass through centers of the plurality of terminal fixing portions 13A, 13B, 23A, and 23B and on the orthogonal lines 16, 17, 26, and 27 that are orthogonal to the center lines 15 and 25 and pass through the centers of the plurality of terminal fixing portions 13A, 13B, 23A, and 23B.

With the above-described configuration, the connection cables 40 can be arranged so as to pass through the guide grooves 14A to 14D and 24A to 24E of the wall portions 14 and 24, and work performance of the wiring work and the connection work of the connection cables 40 can be enhanced. This prevents the storage battery 10 from being wrongly assembled.

A direction of connection of the storage batteries 10 by the connection cable 40 can be determined by arranging the connection cables 40 such that the connection cables 40 pass through the guide grooves 14A to 14D and 24A to 24E of the wall portions 14 and 24, and the storage battery 10 can be prevented from being wrongly assembled. In addition, since an orientation of the connection cable 40 is kept by the guide grooves 14A to 14D and 24A to 24E, the terminal fixing portions 13A, 13B, 23A, and 23B composed of bolts can be stopped from rotating at the time of the work of fastening the connection cables 40 to the positive terminals 11A and 11B and the negative terminals 21A and 21B and after the work of fastening. Moreover, work performance at the time of connecting the storage batteries 10 by the connection cable 40 to make the battery pack 1 can be enhanced.

Although the embodiment of the present invention has been disclosed, it will be apparent to those skilled in the art that changes may be made without departing from the scope of the present invention. It is intended to cover in the appended claims all such modifications and equivalents.

### [Reference Signs List]

1 ... battery pack, 10...storage battery, 11A, 11B...positive terminal, 12...terminal-fixed base, 13A, 13B...terminal fixing portion, 14...wall portion, 14A, 14B, 14C, 14D...guide groove, 15...center line, 16, 17...orthogonal line, 21A, 21B...negative terminal, 22...terminal-fixed base, 23A, 23B...terminal fixing portion, 24...wall portion, 24A, 24B, 24C, 24D, 24E...guide groove, 25...center line (extension), 26, 27...orthogonal line, 40...connection cable

## Claims

1. A battery pack (1) in which a plurality of storage batteries (10) are combined and connected, **characterized in that**
the plurality of storage batteries (10) have a plurality of positive terminals (11A, 11B) and a plurality of negative terminals (21A, 21B) corresponding in number to the positive terminals (11A, 11B),
one of the plurality of positive terminals (11A, 11B) and the plurality of negative terminals (21A, 21B) is arrayed in a first direction, and
the other of the plurality of positive terminals (11A, 11B) and the plurality of negative terminals (21A, 21B) is arrayed in a second direction different from the first direction.

2. The battery pack (1) as claimed in claim 1, **characterized in that**
the first direction and the second direction are orthogonal to each other.

3. The battery pack (1) as claimed in claim 2, **characterized in that**,
on an extension in an arraying direction of one of the plurality of positive terminals (11A, 11B) and the plurality of negative terminals (21A, 21B), a terminal constituting the other of the plurality of positive terminals (11A, 11B) and the plurality of negative terminals (21A, 21B) is arranged.

4. The battery pack (1) as claimed in claim 3, **characterized in that**
the plurality of positive terminals (11A, 11B) and the plurality of negative terminals (21A, 21B) have a terminal-fixed base (12, 22) to be connected to a connection cable (40) and a plurality of terminal fixing portions (13A, 13B, 23A, 23B) for fixing the connection cable (40) to the terminal-fixed base (12, 22),
a wall portion (14, 24) is provided so as to surround the terminal-fixed base (12, 22), and
the wall portion (14, 24) has guide grooves (14A to 14D, 24A to 24E) for the connection cable (40) to pass through on a center line (15, 25) which passes through centers of the plurality of terminal fixing portions (13A, 13B, 23A, 23B) and on orthogonal lines (16, 17, 26, 27) which are orthogonal to the center line (15, 25) and pass through the centers of the plurality of terminal fixing portions (13A, 13B, 23A, 23B).
